# EUROPEAN PATENT APPLICATION

(11) **EP 0 603 009 A2**
(43) Date of publication of application: **22.06.1994**
(21) Application number: 93310264.2
(22) Date of filing: 17.12.1993
(51) Int. Cl.: C03B 7/08

(54) **Feeder**

(30) Priority: 18.12.1992 US 992714
(71) Applicant: Emhart Glass Machinery Investments Inc., Wilmington, Delaware 19801 (US)
(72) Inventor: Buettiker, Paul, Bloomfield, Connecticut 06002 (US); Liska, Timothy J., West Simsbury, Connecticut 06092 (US); Nguyen, Can, Long Meadow, Massachusetts 01106 (US)
(74) Representative: Randall, John Walter

(57) **Abstract**

A feeder for a glass container forming machine comprising a spout bowl (11) including a vertically extending neck portion (32) having a vertical discharge passage through which molten glass will continuously flow to leave the spout bowl. An orifice plate (36) forms the molten glass leaving the passage into a selected number of runners which are sheared into discrete gobs of molten glass. A heater (56) heats the neck portion to decrease the wall shear stress of the molten glass flowing along the passage to increase the weight of a formed gob, and a cooler (60) cools the neck portion to increase the wall shear stress of the molten glass flowing along the passage to decrease the weight of a formed gob.

## Description

The present invention relates to machines such as I.S. (individual section) machines which receive discrete gobs of molten glass and form them into glass containers and, more specifically, to a spout bowl assembly which is used in connection with a feeder to feed gobs to the machine.

In the process of making glass articles, the solid components of the glass batch are melted in a furnace and then passed through a forehearth which may consist of a rear or cooling section with means for both heating and cooling and a front section called the conditioning or equalizing section and which usually has means for heating only. At the end of the forehearth, there is usually a spout and feeder mechanism which together cooperate to form the molten glass into gobs for delivery to the glass container forming machine.

The forehearth along with the spout and feeder mechanism function to take the glass from a melting furnace at whatever temperature is best for glass making and to deliver it to the forming machine as a uniformly consistent gob having the desired weight, shape and temperature and at a speed suited to the article being fabricated. The spout itself usually contains heating elements to control the temperature of the contained molten glass. Such heating elements in the form of gas burners heating the air above the contained molten glass are shown in U.S. patents numbered 4,725,301, 2,990,649, 2,623,330 and 2,139,911.

It has long been the goal to provide uniform temperature and viscosity at the discharge of the spout bowl, and accordingly, techniques are conventionally employed to mix the molten glass. For example, the bowl may be rotated or the spout bowl tube may be rotated or vorticular flow can be created by choosing an exit contour that will yield such flow. See, for example, U.S. patents 1,869,921 and 1,870,210.

U.S. Patents numbered 4,682,998 and 4,708,729 suggest that gob weight can be controlled by controlling 1) the temperature, homogeneity and viscosity of the molten glass; 2) the level of glass in the feeder bowl; 3) the wear of the orifice hole(s); and 4) the motion of the movable structures, i.e. tube rotation, speed and stroke of the plunger(s) and the cutting speed of the shear blades.

It is accordingly an object of the present invention to provide an improved system for controlling gob weight.

The invention provides a feeder for a glass container forming machine comprising
a spout bowl including an elongated vertically extending neck portion having a vertical discharge passage through which molten glass will continuously flow to leave the spout bowl,
an orifice plate to form the molten glass leaving said passage into at least one runner which will be sheared to form a discrete gob of molten glass having a selected weight which will be formed into a container, characterized by
means for controlling the weight of the gob by controlling the shear stress required to overcome the friction of the molten glass flowing along said passage including
heating means for heating said neck portion to decrease the wall shear stress of the molten glass flowing along said passage to increase the weight of a formed gob, and
cooling means for cooling said neck portion to increase the wall shear stress of the molten glass flowing along said passage to decrease the weight of a formed gob.

Other objects and advantages of the present invention will become apparent from the following portion of this specification and from the accompanying drawings which illustrate a presently preferred embodiment incorporating the invention.

Referring to the drawings:
Figure 1 is a side elevational view showing feeder comprising a spout bowl
Figure 2 is a schematic diagram showing the control system for the spout bowl.
Figure 3 is a view taken at 3-3 of figure 1.

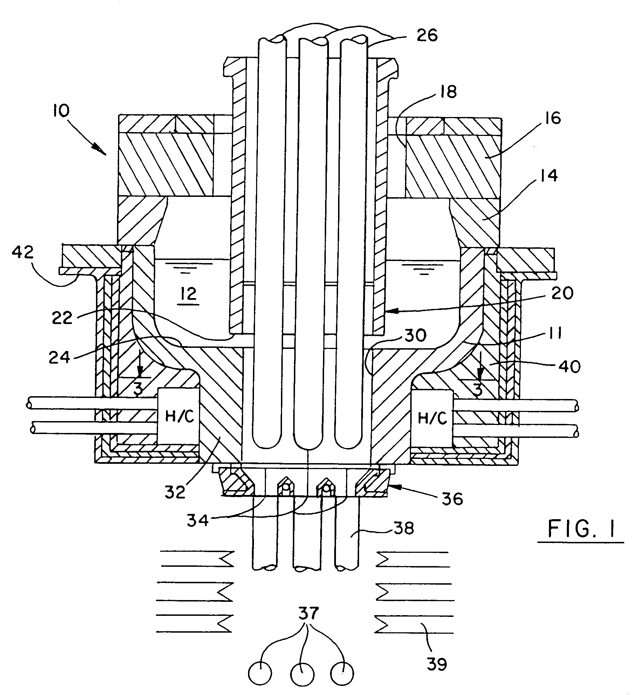

A feeder 10 for a triple gob I.S. machine is shown in figure 1. The feeder 10 comprises a spout bowl 11 conventionally made from a ceramic material which contains molten glass 12 supplied from a forehearth (not shown). The contained molten glass can be heated by conventional gas burners (not shown) located in a burner block 14. On top of the burner block is a spout cover 16 which has an opening 18 through which a cylindrical tube 20 extends to define, between the bottom 22 of the tube and a flat bottom surface 24 of the spout bowl, an annular discharge path for the molten glass. Extending down through the tube 20 are three plungers 26 which project downwardly into a vertical discharge passage 30 of an elongated vertical extending neck portion 32 in alignment with corresponding orifices 34 in an orifice plate 36 which closes the passage 30. The plungers 26 reciprocate vertically each time gobs 37 are formed and are arranged in a common plane. Runners 38 of molten glass continuously flow from the orifices 34 and are cut into discrete gobs by a corresponding number of shear pairs 39 (the shears are presented schematically 90° from their correct position for purposes of clarity). To reduce heat loss insulation 40 is located between the spout bowl 11 and a spout bowl housing 42.

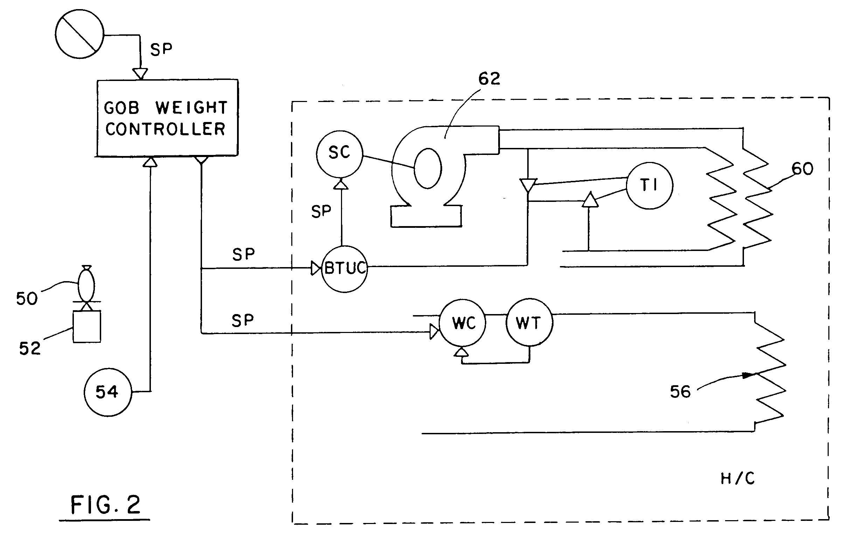

As shown in figure 2, ware 50 formed in the I.S. machine is periodically weighed by a weighing device 52 and the weight is transmitted by a suitable transmitter 54 to a Gob Weight Controller which compares the transmitted weight to a gob weight set point. Ware weight can be controlled by controlling the wall shear stresses of the molten glass flowing down the elongated spout neck portion 32. As can be seen from figure 1, the spout neck portion 32 is elongated so that a heating/cooling element H/C can extend around the spout neck from a location proximate the orifice plate. Located within this heating/cooling element is a heat source 56 (which may be in the form of heating coils) powered by a power transmitter WT controlled by a Power Controller WC. Operation of the Power Controller WC is controlled by the Gob Weight Controller via a settable set point SP.

Also located within this heating/cooling element is a cooling coil 60 supplied with cooling liquid or air by a blower/pump 62. The temperature of the coolant can be monitored by temperature indicators TI. The rate of cooling is defined by a speed control SC which is controlled by a BTU controller BTUC. Operation of the BTU controller is controlled by the Gob Weight Controller via a settable set point SP.

When the ware weighs too much the Gob Weight Controller will increase the set point for the BTU controller BTUC which then raises the set point SP for the blower/pump 62 to increase cooling. This increases the shear stress in the glass at the wall of the spout neck portion 32, reducing the flow of molten glass and hence reducing gob weight. When the ware is too light the Gob Weight Controller increases the set point to the power controller WC to increase power transmitted to the heating coils 56 by the power transmitter to heat the wall of the spout neck portion 32 to reduce the shear stress and increase gob weight.

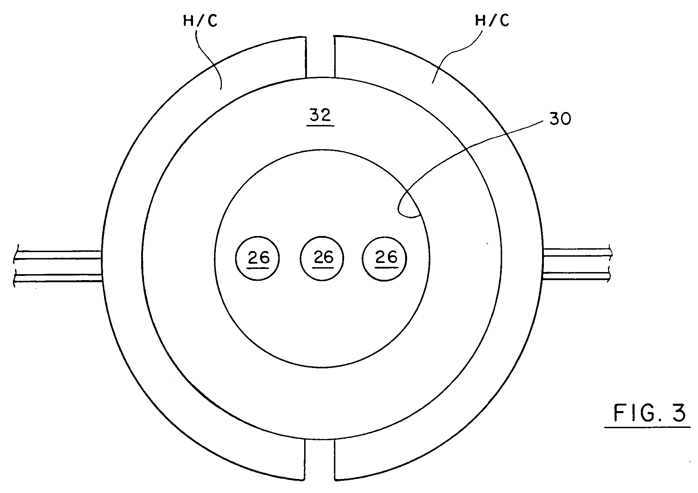

A single heating/cooling element H/C may surround the spout neck 26 or the heating/cooling element can have a number of portions. For example, the heating/cooling element may have a pair of semicircular elements that meet at a mid-plane transverse to the plane of the plungers and intersecting the central plunger. In that case, as shown in figure 3, each side would be controlled by evaluating the weight of ware formed from the adjacent orifice. Since this heating/cooling is only sufficient to change shear stresses, it will have little effect on the temperature of the formed gobs. The vertical dimension of the spout neck is chosen to provide enough annular surface area for the H/C elements to effect the desired changes to the wall shear stress of the molten glass flowing along the interior wall of the spout neck.

## Claims

1. A feeder for a glass container forming machine comprising a spout bowl (11) including an elongated vertically extending neck portion (32) having a vertical discharge passage through which molten glass will continuously flow to leave the spout bowl, and an orifice plate (36) to form the molten glass leaving said passage into at least one runner which will be sheared to form a discrete gob of molten glass having a selected weight which will be formed into a container, characterized
by means for controlling the weight of the gob by controlling the shear stress required to overcome the friction of the molten glass flowing along said passage including
heating means (56) for heating said neck portion to decrease the wall shear stress of the molten glass flowing along said passage to increase the weight of a formed gob, and cooling means for cooling (60) said neck portion to increase the wall shear stress of the molten glass flowing along said passage to decrease the weight of a formed gob.

2. A feeder for a glass container forming machine according to claim 1, further comprising
means (52) for weighing a formed container,
means (sp) for defining a desired weight for a formed container,
means (Gob Weight Controller) for determining the difference between the weight of a container formed from one of said gobs ands said desired weight, and
means (Gob Weight Controller) for operating said heating means or said cooling means to decrease or increase the shear stress at the wall of said passage to increase or decrease the flow of molten glass from said passage to reduce said difference.
